# EUROPEAN PATENT SPECIFICATION

(11) **EP 4 428 772 B1**
(45) Date of publication and mention of the grant of the patent: **29.07.2026**
(21) Application number: 24315087.7
(22) Date of filing: 11.03.2024
(51) Int. Cl.: G06Q 10/02, G06Q 10/047, G06Q 50/00, G06Q 50/14, G06Q 50/40

(54) **COMPUTING AND TRANSPORTATION RESOURCE OPTIMIZATION ENGINE**
MASCHINE ZUR OPTIMIERUNG VON BERECHNUNGS- UND TRANSPORTRESSOURCEN
MOTEUR D'OPTIMISATION DE RESSOURCES DE CALCUL ET DE TRANSPORT

(30) Priority: 10.03.2023 US 202318120085
(43) Date of publication of application: 11.09.2024
(73) Proprietor: Amadeus S.A.S., 06410 Biot (FR)
(72) Inventor: Guillon, Nicolas, 06410 Biot (FR); Grealou, Yves, 06410 Biot (FR); Jouve, Cecile, 06410 Biot (FR); Bordas, Julien, 06410 Biot (FR); Kochar, Deepak, 06410 Biot (FR)
(74) Representative: Samson & Partner Patentanwälte mbB

(56) References cited:
- US-A1- 2013 036 139
- US-A1- 2017 064 512
- US-A1- 2021 004 733
- US-A1- 2021 342 754

## Description

### FIELD

The present disclosure generally relates to the optimization of resources, and in particular to an optimization engine configured to optimize travel and scheduling itineraries between different collaborators.

### BACKGROUND

As demonstrated by the lockdowns during the COVID-19 pandemic, improvements in communication and computing technology enabled remote work while sustaining workforce productivity. At the same time, with the lifting of restrictions, some workers are returning to the office, while others are remaining remote, and still others are opting for a hybrid arrangement. Travel restrictions have also lifted allowing for the resumption of work and leisure travel.

At the same time, it was noted by some that during the pandemic that overall carbon-dioxide emissions were reduced because of the reduced travel resulting from the lockdowns. The challenges due to climate change have remained and resumption of regular commuting and travel would understandably lead to increased output of carbon-dioxide further stressing efforts to mitigate climate change and its harmful effects. However, in-person social human interaction remains critical for the species.

US 2013/0036139 A1 describes a method of organizing travel between a plurality of travelers by allowing a first traveler to specify criteria and preferences for a trip, finding a plurality of destinations which match the criteria and preferences, then allowing the travelers to rank and vote for each destination. Once one traveler selects a trip based on the ranking, the traveler may invite the other travelers to join them on the trip.

US 2021/0004733 A1 describes systems and methods for automated travel itinerary management. The system may generate an automated itinerary based on travel-related transactions from a user's transaction account. The system may update the automated itinerary as additional travel - related transactions are completed . The system may also include travel data from travel systems , concierge systems , and manual input in the automated itinerary .

### SUMMARY

An aspect of the present specification provides a computing resource optimization engine. The engine comprises a processor and a memory for storing instructions executable on the processor. The processor is configured to execute instructions stored in the memory that comprise:
receiving a primary account identifier and a target location identifier;
generating a collaborator query on at least one platform for collaborator account identifiers matching the primary account identifier;
receiving at least one collaborator account identifier from the platform having a collaborator location identifier matching the target location identifier;
generating a travel query on at least one online booking engine for at least one travel itinerary record that connects an origin location identifier of either the primary account identifier or the collaborator account identifier with the target location identifier;
characterized by
determining an intersection score for the at least one collaborator account identifier based on the at least one itinerary record wherein the intersection score is based on an intersection of time ranges and current location between the primary account identifier and the at least one collaborator account identifier; and,
controlling an output device based on the intersection score.

The target location identifier can include target time ranges.

The online booking engine can be based on any travel booking standard, or combinations of them, such as a global distribution system or the new distribution capability (NDC) protocol.

The controlling of the output device can comprise generating a message representing a booking of the travel itinerary corresponding to the travel query. The controlling of the output device can further comprise generating of a new booking record to correspond with the travel itinerary.

The target location identifier can be associated with the primary account identifier.

The at least one platform can include at least one of: a) one or more social media platforms; b) one or more contact management databases; c) one or more human resource platforms.

The intersection score can be further based on a quantitative opportunity metric representing a value of co-locating individuals respective to the primary account identifier and the at least one collaborator account identifier.

The controlling of the output device can include generating a schedule of events at different times which co-locate individuals respective to the primary account identifier and the at least one collaborator account identifier.

The present specification also provides methods, apparatuses and computer-readable media according to the foregoing.

### BRIEF DESCRIPTION OF THE FIGURES

Figure 1 is a schematic diagram of a system for resource optimization.
Figure 2 shows an example structure of the identifier objects of Figure 1.
Figure 3 is a block diagram of example internal components of the optimization engine of Figure 1.
Figure 4 shows a flowchart depicting a method for resource optimization.
Figure 5 shows example performance of certain blocks of the method of Figure 4.
Figure 6 shows example performance of certain blocks of the method of Figure 4.
Figure 7 shows example performance of certain blocks of the method of Figure 4.

### DETAILED DESCRIPTION

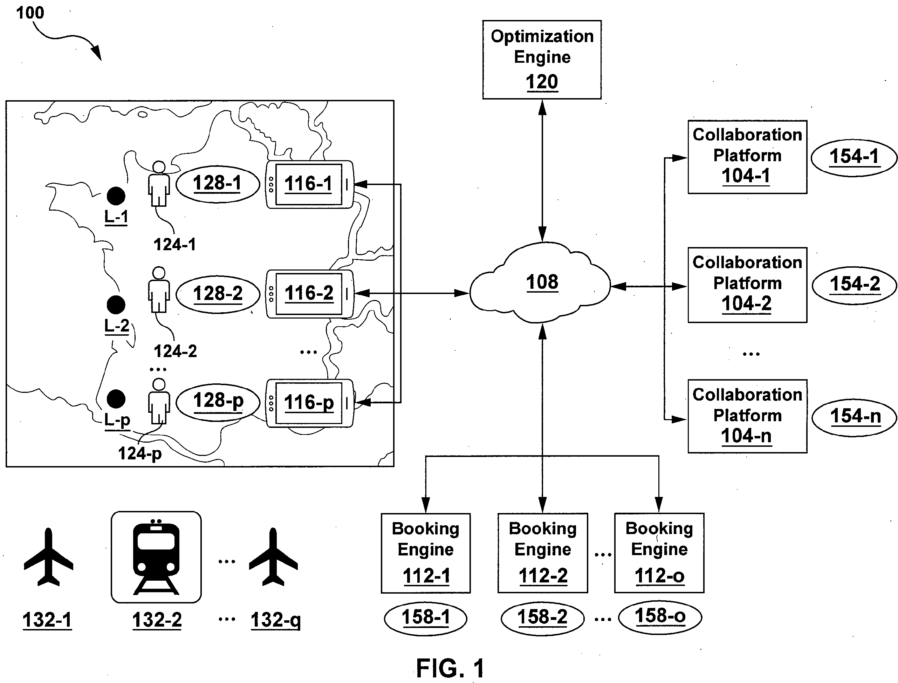

Figure 1 shows a system for computing and travel resource optimization indicated generally at 100. System 100 comprises a plurality of collaboration platforms 104-1, 104-2 ... 104-n. (Collectively, platforms 104-1, 104-2 ... 104-n are referred to as platforms 104, and generically, as platform 104. This nomenclature is used elsewhere herein.) In system 100, platforms 104 connect to a network 108 such as the Internet. Network 108 interconnects collaboration platforms 104 with: a) a plurality of booking engines 112; b) a plurality of client devices 116; and, d) an optimization engine 120. As will be discussed further below, optimization engine 120 performs a number of processing functions for system 100.

Platforms 104 can be based on any present or future electronic media servers that promote collaboration amongst users 124 operating client devices 116. Client devices 116 can be any type of human-machine interface for interacting with platforms 104. For example, client devices 116 can include traditional laptop computers, desktop computers, mobile phones, tablet computers and any other device that can be used to send and receive communications over network 108 and its various nodes that complement the input and output hardware devices associated with a given client device 116. It is contemplated client devices 116 can include virtual or augmented reality gear complementary to virtual reality or augmented reality or "metaverse" environments that can be offered on collaboration platforms 104. Client devices 116 can be operated by different users 124 that are associated with a respective identifier object 128 that uniquely identifies a given user 124 accessing a given client device 116 in system 100.

Notably, the present specification also contemplates that users 124 are geographically dispersed. According to the illustrative example in Figure 1, users 124 are geographically dispersed across the country of France, with user 124-1 shown at location L-1, user 124-2 at location L-2 and user 124-p at location 124-p. However, the geographic range, the number of users 124, and number of locations L are not particularly limited, and are indeed contemplated to be massively scaled across geographies and numbers of users 124. Furthermore, from time-to-time, a subset of the set of users 124 can be collected at the same location L either by coincidence or by way of execution of the teachings of this specification. The present specification contemplates the scenario where, from time to time, users 124 may travel using different transportation actors 132 such as an aircraft transportation actor 132-1 or rail transportation actor 132-2 or any other transportation actor that will occur to those skilled in the art.

Client devices 116 thus also include geocoding capability, such as a global position system (GPS) device, that allow the location L of a device 116, and therefore its user 124, to be identified within system 100. Other means of implementing geocoding capabilities to ascertain the location of users 124 are contemplated, but in general system 100 includes the functionality to identify location L of each device 116 and/or its respective user 124. For example, the location L of a device 116 or a user 124 can also be maintained within collaboration platforms 104.

In a present example embodiment, collaboration platforms 104 can be based on media platforms or central servers that function to provide communications or other interactions between different users 124 that share accounts on those platforms 104. Collaboration functions can include one or more ways to share information between users 124, such as chat, texting, voice calls, image sharing, chat rooms, video conferencing, shared document generation, shared document folders, project management scheduling, individual meeting scheduling either virtually or in person at a common location L. Thus, collaboration platforms 104 can be based on any known present or future collaboration functions. Non-limiting examples of collaboration platforms 104 include social media platforms such as Linked-In^{™} or enterprise platforms such as Microsoft 365^{™} implementing the Microsoft Graph^{™} application programming interface ("API"). To expand on the possibilities, collaboration platforms 104 can be based on social media ecosystems such as, TikTok^{™}, Instagram^{™}, Facebook^{™} or the like. Collaboration platforms 104 can also be based on ecosystems such as Google, that include primary content delivered via YouTube, Google Maps, Google Search, Google News, while also embedding secondary content intended to direct traffic to booking engines 112. Collaboration platforms can also include multiplayer gaming environments such as Fortnite^{™} or metaverse environments such as Roblox^{™}. Collaboration platforms can also include entire office suites such as chat applications such as Microsoft Teams^{™} or suites of productivity applications that include email, calendaring, to-do lists, and contact management such as Microsoft Outlook^{™}, and/or insight engines such as Microsoft Viva^{™}. Collaboration platforms 104 can also include geo-code converters such as Google Maps^{™} or Microsoft Bing^{™} that can translate or resolve GPS coordinates from devices 116 (or other location sources of users 124) into physical locations L and/or coordinate the resolved physical locations L with the destinations served by transportation actors 132 and their respective booking engines 112. The nature of collaboration platforms 104 is thus not particularly limited. Very generally, platforms 104 provide a means for users 124 to interact with each other via client devices 116 with that data being made available to optimization engine 120.

Booking engines 112 are operated by different travel actors that provide travel services. Booking engines 112 can be based on a traditional Global Distribution System (GDS) or the New Distribution Capability (NDC) protocol or other travel booking architectures or protocols that can arrange travel itineraries for users 124 to travel between different locations L via one or more transportation actors 132. Booking engines 112 can thus be built on many different technological solutions and their implementation can be based on different distribution channels, including indirect channels such as GDS and/or direct channels like NDC hosted by individual airline transportation actors 132-1. Booking tools via various booking engines 112 can be provided according to many solutions for different travel content distributors and aggregators including online and offline services such as travel agencies, metasearch tools, NDC, low cost carriers ("LCC") and aggregators that sell airline seats, and the like. Booking engines 112 can be "white label" in that they are powered by travel technology companies such as Amadeus^{™} but branded by other entities, or they can be hosted directly by the travel operator such as an airline operating a particular airline transportation actor 132-1 or a railway operating a particular railway transportation actor 132-2.

At this point it is to be clarified and understood that the nodes in system 100 are scalable, to accommodate not only a large number of users 124, devices 116, locations L, collaboration platforms 104 and booking engines 112, but also a large number of different transportation actors 132, including a plurality of airline transportation actors 132-1 (i.e. different airlines), a plurality of railway transportation actors 132-2 (i.e. different railway companies) and/or a plurality of different transportation actors 132 not expressly identified in Figure 1.

According to a specific illustrative example, and as will be explained in greater detail below, the present specification can, amongst other things, have particular application to arranging physical interactions between different users 124 via travel itineraries, by co-locating different users 124 at a particular location L, which can reduce the overall amount of usage of travel actors 132 and therefore provide certain efficiencies such as the reduction of carbon-dioxide emissions from different travel actors 132.

Accordingly, client devices 116 are based on any suitable client computing platforms (with examples noted above) operated by users 124 that may have an interest in a physical meeting with other users 124. Each device 116 and its user 124 is thus associated with a user identifier object 128.

A person of skill in the art is to recognize that the form of an identifier object 128 is not particularly limited, and in a simple example embodiment, can be simply an alphanumerical sequence that is entirely unique in relation to other identifier objects in system 100. Identifier objects can also be more complex as they may be combinations of account credentials (e.g. user name, password, Two-factor authentication token, etc.) that uniquely identify a given user 124. Identifier objects themselves may also be indexes that point to other identifier objects, such as accounts. The salient point is that they are uniquely identifiable within system 100 in association with what they represent.

Users 124 can interact, via devices 116, with both collaboration platforms 104 as well as booking engines 112. Each user identifier object 128 can be used by other nodes in system 100, including collaboration platforms 104, booking engines 112 and optimization engine 120 to track, amongst other things a) the location L of each user 124; b) the fact of collaborations between different users 124 on collaboration platforms 104; c) expressions of interest for different users 124 to co-locate at a given location L; d) travel itinerary records used to fulfill the expressions of co-location interest.

In general, optimization engine 120 is configured to determine which combination of travel itineraries actualize expressions of co-location that reduce or minimize the requirement for the usage of transportation actors 132 while increasing or maximizing the number of co-locations.

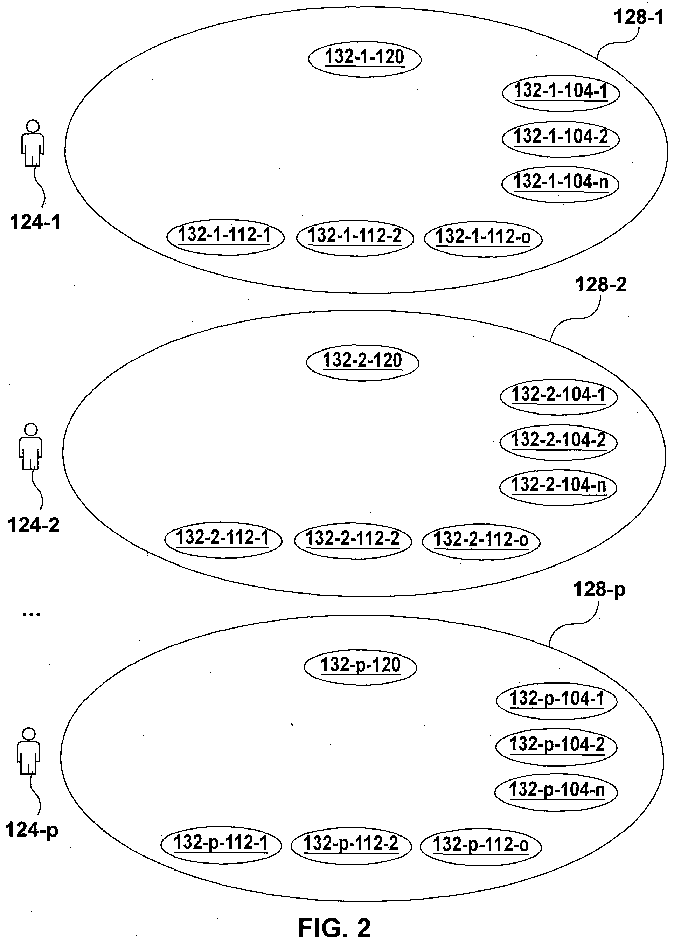

At this point a side-bar elaboration of identifier objects 128 is worth noting. Figure 2 shows a non-limiting example of how identifier objects 128 can be implemented as a plurality of identifier sub-objects 132. Identifier sub-objects 132 follow the nomenclature 132-X-Y where X corresponds to reference for a corresponding user 124 and Y corresponds to the reference for a corresponding node in system 100. (This nomenclature builds on the earlier-discussed nomenclature, since identifier objects are referred to collectively as identifier objects 128 and generically as identifier object 128.) To elaborate, sub-objects 132-1-Y refer to user 124-1; sub-objects 132-2-Y refer to user 124-2; sub-objects 132-p-Y refer to user 124-p. Sub-object identifier 132-1-120 refers to the identifier for user 124-1 for optimization engine 120. Sub-object identifier 132-1-104-1 refers to the identifier for user 124-1 for platform 104-1. Sub-object identifier 132-1-104-2 refers to the identifier for user 124-1 for platform 104-2. This nomenclature repeats for all identifier sub-objects 132 for each user 124, across each collaboration platform 104 and each booking engine 112.

Sub-objects 132 may be used to accommodate individual authentication protocols of users 124 for each node across system 100, while all tied together through object 128. Sub-objects 132 can also be provided to anonymize, for privacy purposes, the specific identity (i.e. personally identifying information or PII) of the associated user 124. Some or all of those identifier sub-objects 132 may be anonymous or private to certain nodes in system 100 while being non-private to other nodes. For example, the operator of a booking engine 112 may maintain an account (a form of identifier sub-object 132-X-112) respective to each user 124-X that expressly identifies the user 124-X to handle a travel itinerary record such as delivery and payment processing of a given purchased good or service, such as a ticket or voucher for a service at a travel destination. Booking engine 112 and/or travel actors 132 may also generate or maintain a passenger name record (PNR) respective to a given user 124, another type of identifier sub-object 132. At the same time, the collaboration platform 104 or booking engine 112 or optimization engine 120 may need not expressly identify a given user 124 to each other in order to fulfill its function, but can instead rely upon "cookies", a known-type of identifier sub-object 132-X-104, or any subsequent technology that replaces "cookies" but fulfills a similar function of anonymously identifying a user 124. However, for simplification of explanation of the present embodiment, a single identifier object 128 for each user 124 may be referenced in this specification, but a person skilled in the art will now appreciate such simplification and that contextually, a reference to an identifier object 128 for a given node in system 100 may involve the use of an identifier sub-object 132 instead. Accordingly, for simplicity in explanation, the following discussion may simply refer to identifier object 128, but a person of skill in the art will recognize that identifier object 128 may be implemented according to Figure 2.

It is contemplated that each collaboration platform 104 has at least one collaboration application 154 stored in non-volatile storage of the respective platform 104 and executable on its processor. (The types of potential collaboration applications 154 that fulfill different types of collaboration functions were discussed above.) Applications 154 can be accessed by users 124 via devices 116 and be accessible by optimization engine 120 to track the fact and nature of interactions between different users 124. The applications 154 can also be used to track expressions of interest in co-location of different users 124 at a common location L. Those expressions of interest may be direct (e.g. an email or chat that says "Hey Bill, When are you going to be in town next? We should meet face to face?") or indirect (e.g. an email or text that says "Hey Bill, I am having trouble understanding what you want to do next here? Can you explain again?") The means by which expressions of interest are gathered is not particularly limited to these two examples. The applications 154 can also be used to provide a calendar or scheduling function that indicates a virtual meeting of one or more users 124 and/or a physical meeting of one or more users at a common location L.

It is contemplated that booking engines 112 also include an itinerary management application 158 stored in non-volatile storage and executable on their processors. Applications 158 can suggest, generate and track individual travel itinerary records for individual users 124. In variants, applications 128 can also establish, modify or cancel routes of transportation vehicles between locations L for different travel actors 132 according to optimization guidance generated by optimization engine 120.

Optimization engine 120 can also be configured to obtain reports based on applications 154 and applications 158. Such reports can provide a basis for optimization engine 120 to generate or modify travel itineraries for users 124 via booking engines 112 and/or suggest collaboration interactions (e.g. scheduling a face-to-face meeting at a given location L) via platforms 104 that fulfill expressions of interest for users 124 to co-locate at a given location L.

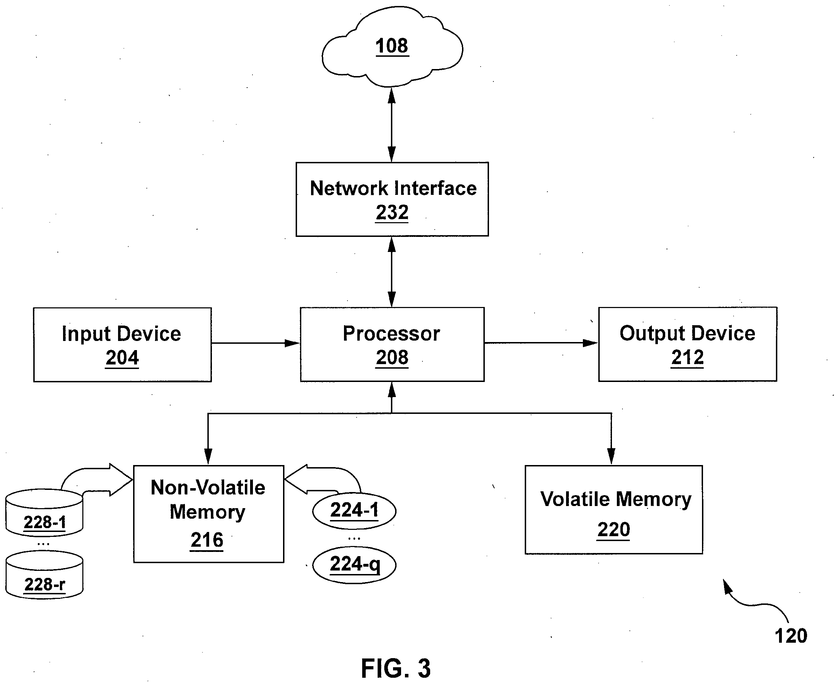

Having described an overview of system 100, it is useful to comment on the hardware infrastructure of system 100. Figure 3 shows a schematic diagram of a non-limiting example of internal components of optimization engine 120.

In this example, optimization engine 120 includes at least one input device 204. Input from device 204 is received at a processor 208 which in turn controls an output device 212. Input device 204 can be a traditional keyboard and/or mouse to provide physical input. Likewise output device 212 can be a display. In variants, additional and/or other input devices 204 or output devices 212 are contemplated or may be omitted altogether as the context requires.

Processor 208 may be implemented as a plurality of processors or one or more multi-core processors. The processor 208 may be configured to execute different programing instructions responsive to the input received via the one or more input devices 204 and to control one or more output devices 212 to generate output on those devices.

To fulfill its programming functions, the processor 208 is configured to communicate with one or more memory units, including non-volatile memory 216 and volatile memory 220. Non-volatile memory 216 can be based on any persistent memory technology, such as an Erasable Electronic Programmable Read Only Memory ("EEPROM"), flash memory, solid-state hard disk (SSD), other type of hard-disk, or combinations of them. Non-volatile memory 216 may also be described as a non-transitory computer readable media. Also, more than one type of non-volatile memory 216 may be provided.

Volatile memory 220 is based on any random access memory (RAM) technology. For example, volatile memory 220 can be based on a Double Data Rate (DDR) Synchronous Dynamic Random-Access Memory (SDRAM). Other types of volatile memory 220 are contemplated.

Processor 208 also connects to network 108 via a network interface 232. Network interface 232 can also be used to connect another computing device that has an input and output device, thereby obviating the need for input device 204 and/or output device 212 altogether.

Programming instructions in the form of applications 224 are typically maintained, persistently, in non-volatile memory 216 and used by the processor 208 which reads from and writes to volatile memory 220 during the execution of applications 224. Various methods discussed herein can be coded as one or more applications 224. One or more tables or databases 228 are maintained in non-volatile memory 216 for use by applications 224.

The infrastructure of optimization engine 120, or a variant thereon, can be used to implement any of the computing nodes in system 100, including platforms 104 and booking engines 112. Furthermore, optimization engine 120, platforms 104 and booking engines 112 may also be implemented as virtual machines and/or with mirror images to provide load balancing. Functions of optimization engine 120 may also be distributed amongst different booking engines 112 and/or platforms 104, thereby obviating the need for a central optimization engine 120, or contemplating an optimization engine 120 with partial functionality while the remaining functionality is effected by other nodes in system 100. By the same token, a plurality of optimization engines 120 may be provided, especially when system 100 is scaled.

Furthermore, a person of skill in the art will recognize that the core elements of processor 208, input device 204, output device 212, non-volatile memory 216, volatile memory 220 and network interface 232, as described in relation to the server environment of optimization engine 120, have analogues in the different form factors of client machines such as those that can be used to implement client devices 116. Again, client devices 116 can be based on computer workstations, laptop computers, tablet computers, mobile telephony devices or the like.

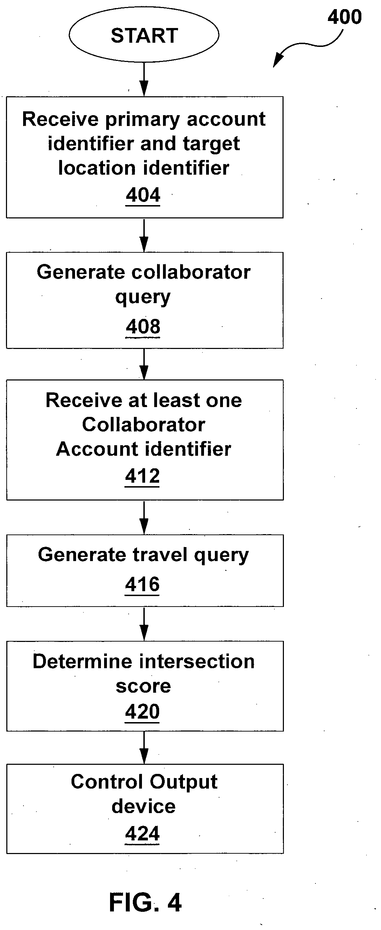

Figure 4 shows a flowchart depicting a method for resource optimization indicated generally at 400. Method 400 can be implemented on system 100. Persons skilled in the art may choose to implement method 400 on system 100 or variants thereon, or with certain blocks omitted, performed in parallel or in a different order than shown. Method 400 can thus also be varied. However, for purposes of explanation, method 400 will be described in relation to its performance on system 100 with a specific focus on treating method 400 as, for example, application 224-1 maintained within optimization engine 120 and its interactions with the other nodes in system 100.

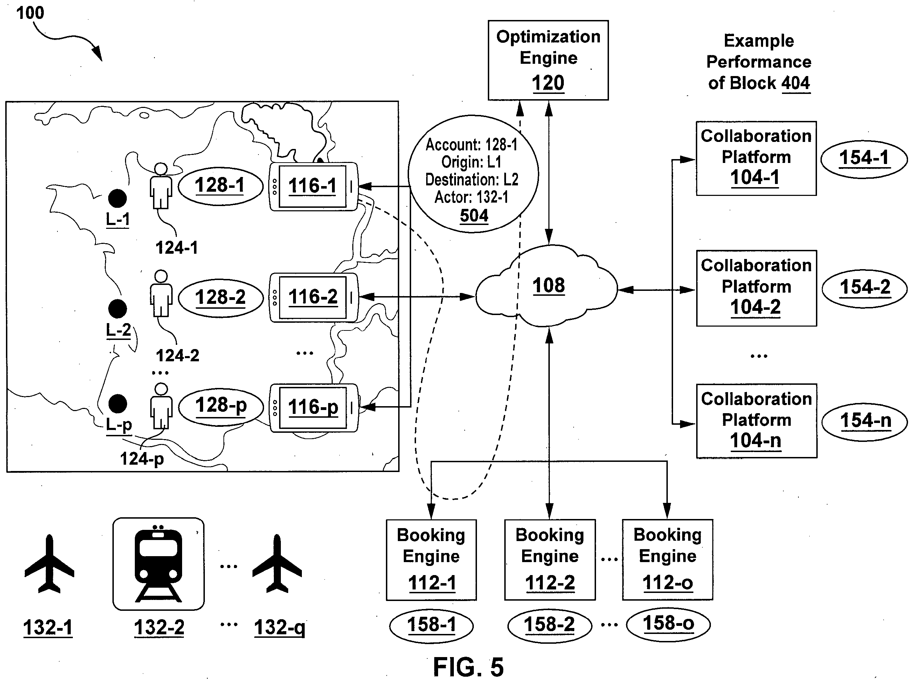

Block 404 comprises receiving a primary account identifier and a target location identifier. In a present example embodiment, block 404 is effected by optimization engine 120, which receives one of the account identifiers 128 and one of the location identifiers L. In a simple example, user 124-1 provides input at device 116-1 indicating that they intend to travel to location L-2 from location L-1. The input can be based on an express travel itinerary record already generated by, for example, booking engine 112-1 that was created by or on behalf of user 124-1. The itinerary record is delivered to optimization engine 120 in association with account identifier 128-1. This example performance is shown in Figure 5 as a sample travel itinerary record 504 is generated on booking engine 112-1 and delivered to optimization engine 120.

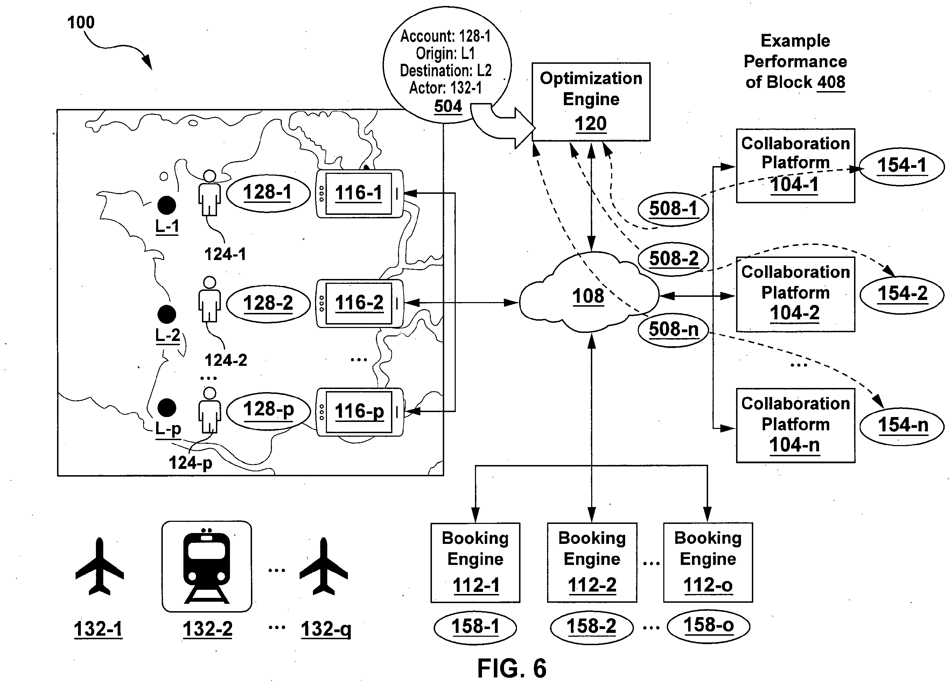

Block 408 comprises generating a collaborator query. Block 408 is also effected by optimization engine sending queries to one or more of applications 154 on different collaborator platforms 104. The collaborator query seeks to locate communications (or other interactions or linkages or connections) between user 124-1 and other users 124 that indicate an interest in a face-to-face meeting in the event that a co-location occurs. This example performance of block 408 is shown in Figure 6, where electronic query messages 508 are sent from optimization engine 120 to applications 154 via platforms 104.

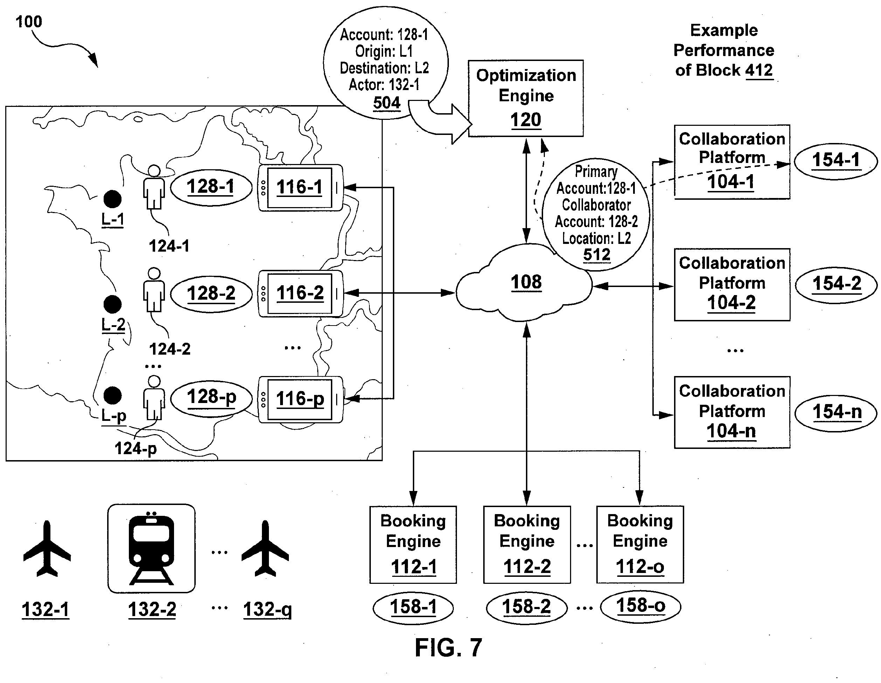

Block 412 comprises receiving a response to the query. One possibility is that the response to query messages 508 is "null", indicating that there is no other user 124 that collaborates with user 124-1 that will be at location L-2 during the relevant time. In the event of a null response, method 400 ends and may restart. However, in the event that at least one collaborator account identifier 128 matches an expression of interest to meet at a matched location L and time, then block 412 will comprise receiving that collaborator account identifier 128. According to our specific example so far, we can note that user 124-2 is already located at location L-2. We can add a further assumption that account identifier 128-1 (respective to user 124-1) and account identifier 128-2 (respective to user 124-2) show previous collaborations on platforms 104. Accordingly, this example performance of block 412 is shown in Figure 7, where an electronic query reply message 512 is sent from platform 104-1 to optimization engine 120 indicating that user 124-2 is present at location. Example previous collaborations may include an exchange of texts or messages, being a "connection" on a social media platform such as Linkedln, being part of the same department for an employer. Other criteria that satisfy an indication of previous collaborations will occur to those skilled in the art.

(Note that much more complex variants are contemplated beyond this simple but salient illustrative example of Figure 5 and Figure 6. For example, the match of "time" may not exactly overlap, but the expression of interest and the location may match, such that part of method 400 can include adjusting travel itineraries on booking engines 112 to shift times rather than requiring a specific match. This concept shows some of the potential for scaled complexities of the present specification, and further complexities will be discussed once a complete discussion of the foundational simplified example of method 400 has been completed.)

Block 416 comprises generating a travel query. The travel query can comprise a query to at least one online booking engine 112 for at least one travel itinerary record that connects an origin location identifier of either the primary account identifier or the collaborator account identifier with the target location identifier. According to the simplified example above, where the request at block 404 was based on travel itinerary record 504, then block 416 is trivial and comprises examining travel itinerary record 504 to confirm the overlap between the co-location of user 124-1 and user 124-2 at location L-2.

However, in variants, block 404 may only comprise receipt of the primary account identifier 128 and an intended location L, in which case block 416 can comprise searching for an existing travel itinerary record (e.g. such as record 504), or actually request the creation of a travel itinerary record at a booking engine 112 and/or the scheduling of individual travel actors 132, based on the results from block 404, block 408 and block 412. In the case of creating a travel itinerary record, optimization engine 120 can "search" across different booking engines 112 for the most optimal schedule in terms of both price and travel times.

Block 420 comprises determining an intersection score. The intersection score can be a weighted percentage or other value representing the desirability of a co-location between the user 124 (e.g. user 124-1) associated with the primary account identifier 128 from block 404 and the user 124 (e.g. user 124-2) associated with the collaborator account identifier 128 from block 412. It should be understood that block 420 is optional, and/or block 420 can be assumed to always determine a weighting of one hundred percent. However, it is contemplated that block 420 can be based on a query to platforms 104 from optimization engine 120 or based on previous queries. The intersection score can be a time window showing overlap in schedule availability between the relevant users 124. The intersection score can thus be based on any indicators that suggest a degree of connection between user 124-1 and user 124-2. For example, in the case of Linkedln, user 124-1 may be a "first", "second" or "third" level connection to user 124-2, which can be a factor in establishing a threshold level of connection. As another example, where platform 104 is or includes an email server, the amount of email or chat traffic between users 124 can be a factor in establishing a level of connection. Natural language processing (NLP) can be used to "read" the email or chat traffic to assess urgencies of a face-to-face meeting. Projects tracked in platforms 104 that include teams involving the same users 124 maybe another factor. Other factors may include the presence of each user 124 in the other's contact management database. Another factor may include whether each user 124 has the same employer, and/or whether each user 124 is in the same or adjacent departments. Another factor may include whether each user 124 has a previous or future-scheduled virtual meeting with each other as stored on one more platforms 104. Another factor may include whether the user 124 is a professional colleague or a social connection, as may be ascertained from the particular platform(s) 104 establishing the collaboration connection. Indeed one potential advantage of the present specification is the possibility of facilitating non-professional (e.g. social or family network) contacts during professional travel, at minimal or no additional travel cost to the employer while also fostering goodwill within the employee. Other factors will now occur to those skilled in the art.

It is to be understood that when determining an intersection score, the factors relevant to location can include range or geographic area. In the example scenario discussed in relation to Figure 1, the co-location of two users 124 is discussed in terms of being at the same location L. In this example of Figure 1, the "same location L" is simply defined to be the "same location L-1", or the "same location L-2" or the "same location L-p". However, in more complex scenarios, the "same location L" can be more variable. In other words, the actual distance between the users 124 can be a factor in establishing the desirability of a co-location between the users 124. At a granular level, this means that even if two users U are in the same location L-2, the distance between them (e.g. opposite ends of the city vs within the same city block) within location L-2 can be a factor for the intersection score. On the other hand, if there are factors that otherwise lead to a highly-weighted percentage in favor of a desirability of a meeting between users 124, then a larger radius can satisfy whether users 124 are within a sufficient distance of each other to satisfy the desirability of co-locating the users 124 face-to-face. Indeed, at a larger scale, even location L-1 and location L-2 can be considered to be a common geographic area for purposes of the intersection score. For example, if user 124-1 has travelled from North America to location L-1, then, depending on other factors in the intersection score for user 124-1 to meet user 124-2, then location L-1 and location L-2 can be considered sufficiently proximate to suggest additional travel for user 124-1 from location L-1 to location L-2 of user 124-2. During determination of the intersection score, such location factors can be defined in terms of a distance from a given location L where one user 124 is located that defines a "catchment area" or geographic area for potential meetings with another user 124. The geographic area may be defined in different ways, such as a geographic radius or travel time. In other words, the geographic area may be defined in terms of a distance (e.g. a radius) or defined in terms travel times based on available travel actors 124 between the relevant locations L. For example, if a frequent high-speed rail service exists between two locations L then those two locations L can be defined as within the "catchment area", whereas two locations L that may be closer together in terms of distance, but lack travel infrastructure, can be deemed to be outside the "catchment area".

Block 424 comprises controlling a device based on one or more of the previous blocks. The control can be based on various threshold levels of the intersection score, or if block 420 is omitted then the control can be based on the mere fact of the match from block 412.

The "device" in block 424 can include controlling an output device such as network interface 232 to communicate with one or more collaboration platforms 104, one or more booking engines 112 or one or more client devices 116, to issue instructions thereto and control those devices to implement the various resource optimizations contemplated herein.

Controlling the output device can take many forms. For example, an automated message can be generated and sent from optimization engine 120 or an appropriate one of the platforms 104 for delivery to each user 124 via client devices 116 advising of the co-location event and opportunity to schedule a face-to-face meeting. Controlling an output device can also include automatically populating the schedule or calendar of each user 124 on a given collaboration platform 104 with an appointment at the appropriate time and location L. In more sophisticated scenarios, controlling the output device can include creating or adjusting a travel itinerary record with the relevant booking engine 112. The travel itinerary record can be optimized (created or adjusted) based on a reduced or least amount of consumption or resources for different travel actors 132 across system 100 and/or can be optimized to align with the presence of as many users 124 where an expression of interest for co-location has been determined by optimization engine 120. The travel itinerary can be extremely granular including transportation options and maps at a specific location L, such as taxis, public transit or walking routes. In a further variant, where there is an expression of interest for more than two users 124 to co-locate for an interaction or meeting, but one or more of the users 124 face travel itinerary challenges interfering with their ability to travel to a common location L, then optimization engine 120 can function to have as many users 124 co-locate as possible while scheduling the remainder of users 124 to meet virtually. As the meeting events draw nearer, optimization engine 120 can also monitor for cancellations and either automatically establish alternative itineraries or create a virtual meeting option for a given user 124 affected by such a disruption.

In still further variants, the control of the output device can include the actual scheduling of individual transportation actors 132. In this variant, system 100 is operating at scale where optimization engine 120 is executing method 400 in parallel for a plurality of different users 124 across system 100, and accordingly aggregating as many matches as possible to suggest routings between locations L for different transportation actors 132.

It should be understood that, as part of the potential for scale of system 100, block 412 can comprise receiving a plurality of potential collaborator account identifiers. For example, if user 124-1 is shown to have collaborations with user 124-2 and user 124-p, then this fact can be returned at block 412. In this example, the intersection scores for each collaborator user 124 at block 420 can be based on more complex criteria. To elaborate, assume that user 124-1 has an intersection of forty percent with user 124-2 and twenty percent with user 124-q. the intersection of forty percent with user 124-2 may be too low to warrant generating or modifying a travel itinerary for user 124-1 to travel to location L-2. However, if user 124-q is also showing a geolocation presence at location L-2, then notwithstanding the relatively low individual intersection scores, the scores can accumulate to exceed a threshold that results in the controlling of an output device at block 424 that generates, modifies otherwise supports the travel itinerary for user 124-1 to travel to location L-2 to meet with both user 124-2 and user 124-q in person.

Different technical advantages according to the present specification will now be apparent, including the mitigation of extraneous electronic messages at booking engines 112 of repeated bookings and cancellations as an individual user 124 attempts to manually coordinate co-location with as many other users 124 as possible. According to this advantage, excess and wasted computing resources in system 100 in the form of processing, memory and communication bandwidth are optimized across various nodes in system 100. Another advantage includes the optimized use of travel resources. For example according to system 100, if user 124-1 needed a face-to-face visit with both user 124-2 and user 124-p, then optimization engine 120 can be configured to perform method 400 to attempt coordination for user 124-1 to only travel from location L-1 to location L-2 when user 124-p is also already schedule to be in location L-2.

A person skilled in the art will now appreciate that the foregoing discussion is generalized and simplified and that many implementation details can be included in an actualization of system 100 as desired.

In view of the above it will now be apparent that variations, combinations, and subsets of the foregoing embodiments are contemplated. For example, optimization engine 120 may be obviated or its function distributed throughout a variant on system 100, such that all or part of method 400 can occur inside a collaboration platform 104 during a session with a client device 116 and/or a given booking engine 112 and/or a given client device 116.

As another example, it should be understood that while the information submitted at block 404 can contemplate having the user 124 of the primary account 128 travel to another location L, it is also contemplated that the user 124 of the primary account 128 may remain at their current location and method 400 is directed to drawing the collaborating user 124 (or users 124) to the location of the user 124 of the primary account 128. In other words, instead of using method 400 to manage travel of user 124-1 from location L-1 to location L-2, method 400 also contemplates managing the travel of user 124-2 from location L-2 to location L-1.

It should also be noted that while the present example focuses on transportation actors 132, the present specification could scale via booking engines 112 to other travel actors (not shown) that can broadly encompass different categories of all types of travel service offerings beyond transportation actors and including accommodation actors and travel destination actors. As noted, transportation actors 132 can provide transportation services for users 124, such as airlines, rental car agencies, rail services, ferries, and bus lines. Accommodation actors can provide lodging for users 124, such as hotels, vacation rentals, resorts and B&Bs ("Bed and Breakfasts"), including the lodging at the location L where a user 124 arrives after receiving a transportation service. Travel destination actors can include providers of activities at the location where a user 124 is lodging. Travel destination actors can thus include, by way of non-limiting examples, restaurants, spas, concert venues, exhibition centers, summits, sporting event venues, fairs, conference venues, sporting arenas, museums, art galleries, tours and resort activity centers and the like. Co-locating scheduling can be at the granular level of transportation destination actors.

A person skilled in the art will now appreciate that the teachings herein can improve the technological efficiency and computational and communication resource utilization across system 100 by making more efficient use of network and processing resources in system 100, as well as more efficient use of transportation actors 132. For example, without system 100, users 124 may generate travel itineraries that require the use of multiple transportation actors 132 to travel to multiple locations L, when utilizing system 100 can lead to optimization engine 120 noting when a plurality of expressions of interest amongst users 124 exist, and either optimizing an existing travel itinerary or generating a new travel itinerary to co-locate as many users 124 at the same location L as possible, while reducing or minimizing the usage of transportation actors 132 to reduce carbon-dioxide emissions and helping to mitigate effects of climate change.

It should be recognized that features and aspects of the various examples provided above can be combined into further examples that also fall within the scope of the present disclosure. In addition, the figures are not to scale and may have size and shape exaggerated for illustrative purposes.

## Claims

1. A computing resource optimization engine (120) comprising a processor and a memory for storing instructions executable on the processor; the processor configured to execute instructions stored in the memory; the instructions comprising:
receive (404) a primary account identifier and a target location identifier;
generate (408) a collaborator query on at least one collaboration platform for collaborator account identifiers matching the primary account identifier;
receive (412) at least one collaborator account identifier from the at least one collaboration platform having a collaborator location identifier matching the target location identifier;
generate (416) a travel query on at least one online booking engine for at least one travel itinerary record that connects an origin location identifier of either the primary account identifier or the collaborator account identifier with the target location identifier;
**characterized by**
determine (420) an intersection score for the at least one collaborator account identifier based on the at least one itinerary record, wherein the intersection score is based on an intersection of time ranges and current location between the primary account identifier and the at least one collaborator account identifier; and,
control (424) an output device based on the intersection score, in such a way to create or adjust the travel itinerary record with the relevant booking engine.

2. The optimization engine (120) of claim 1 wherein the target location identifier includes target time ranges.

3. The optimization engine (120) of any one of claims 1 to 2, wherein the target location identifier is associated with the primary account identifier.

4. The optimization engine (120) of any one of claims 1 to 3, wherein the at least one collaboration platform includes at least one of: a) one or more social media platforms; b) one or more contact management databases; c) one or more human resource platforms.

5. The optimization engine (120) of any one of claims 1 to 4 wherein the intersection score is further based on a quantitative opportunity metric representing a value of co-locating individuals respective to the primary account identifier and the at least one collaborator account identifier.

6. The optimization engine (120) of any one of claims 1 to 5, wherein the controlling (424) of the output devices includes generating a schedule of events at different times which co-locate individuals respective to the primary account identifier and the at least one collaborator account identifier.

7. A method for computing resource implemented via a computer optimization engine (120) comprising:
receiving (404), at the optimization engine, a primary account identifier and a target location identifier;
generating (408), from the optimization engine, a collaborator query on at least one collaboration platform for collaborator account identifiers matching the primary account identifier;
receiving (412), at the optimization engine, at least one collaborator account identifier from the at least one collaboration platform having a collaborator location identifier matching the target location identifier;
generating (416), from the optimization engine, a travel query on at least one online booking engine for at least one travel itinerary record that connects an origin location identifier of either the primary account identifier or the collaborator account identifier with the target location identifier;
**characterized by**
determining (420), at the optimization engine, an intersection score for the at least one collaborator account identifier based on the at least one itinerary record, wherein the intersection score is based on an intersection of time ranges and current location between the primary account identifier and the at least one collaborator account identifier; and,
controlling (424), from the optimization engine, an output device based on the intersection score, in such a way to create or adjust the travel itinerary record with the relevant booking engine.

8. The method of claim 7 wherein the target location identifier includes target time ranges.

9. The method of any one of claims 7 to 8, wherein the target location identifier is associated with the primary account identifier.

10. The method of any one of claims 7 to 9, wherein the at least one collaboration platform includes at least one of: a) one or more social media platforms; b) one or more contact management databases; c) one or more human resource platforms.

11. The method of claim 10 wherein the intersection score is further based on a quantitative opportunity metric representing a value of co-locating individuals respective to the primary account identifier and the at least one collaborator account identifier

12. The method of any one of claims 7 to 11, wherein the controlling (424) of the output devices includes generating a schedule of events at different times which co-locate individuals respective to the primary account identifier and the at least one collaborator account identifier.

13. A computer program implementing the method of any one of claims 7 to 12 when run by a computer.

## Patentansprüche

1. Ein Rechenressourcen-Optimierungssystem (120), das einen Prozessor und einen Speicher zum Sichern von auf dem Prozessor ausführbaren Anweisungen umfasst; wobei der Prozessor so konfiguriert ist, dass er die im Speicher gesicherten Anweisungen ausführt; wobei die Anweisungen umfassen:
Empfangen (404) einer Primär-Kontokennung und einer Zielort-Kennung;
Erzeugen (408) einer Kollaborator-Abfrage auf mindestens einer Kollaborationsplattform nach Kollaborations-Kontokennungen, die mit der Primär-Kontokennung zusammenpassen;
Empfangen (412) mindestens einer Kollaborations-Kontokennung von der mindestens einen Kollaborationsplattform, die eine Kollaborations-Ortkennung aufweist, die mit der Zielort-Kennung zusammenpasst;
Erzeugen (416) einer Reise-Abfrage bei mindestens einem Online-Buchungssystem für mindestens einen Reiseplan-Datensatz, der eine Ausgangsort-Kennung entweder der Primär-Kontokennung oder der Kollaborations-Kontokennung mit der Zielort-Kennung verbindet;
**gekennzeichnet durch**
Ermitteln (420) einer Übereinstimmungsbewertung für die mindestens eine Kollaborations-Kontokennung basierend auf dem mindestens einen Reiseplan-Datensatz, wobei die Übereinstimmungsbewertung auf einer Übereinstimmung von Zeitbereichen und aktuellem Standort zwischen der Primär-Kontokennung und der mindestens einen Kollaborations-Kontokennung basiert; und
Steuern (424) eines Ausgabegeräts basierend auf der Übereinstimmungsbewertung, um den Reiseplan-Datensatz mit der entsprechenden Buchungsmaschine zu erstellen oder anzupassen.

2. Das Optimierungssystem (120) nach Anspruch 1, wobei die Zielort-Kennung Ziel-Zeitbereiche umfasst.

3. Das Optimierungssystem (120) nach einem der Ansprüche 1 bis 2, wobei die Zielort-Kennung der Primär-Kontokennung zugeordnet ist.

4. Das Optimierungssystem (120) nach einem der Ansprüche 1 bis 3, wobei die mindestens eine Kollaborationsplattform mindestens eines umfasst: a) eine oder mehrere Social-Media-Plattformen; b) eine oder mehrere Kontaktverwaltungsdatenbanken; c) eine oder mehrere Personalplattformen.

5. Das Optimierungssystem (120) nach einem der Ansprüche 1 bis 4, wobei die Übereinstimmungsbewertung ferner auf einer quantitativen Opportunitätsmetrik basiert, die einen Wert für das Zusammenführen von Personen an einem Ort in Bezug auf die Primär-Kontokennung und die mindestens eine Kollaborations-Kontokennung darstellt.

6. Das Optimierungssystem (120) nach einem der Ansprüche 1 bis 5, wobei die Steuerung (424) der Ausgabegeräte das Erzeugen eines Zeitplans von Ereignissen zu unterschiedlichen Zeitpunkten umfasst, welches Personen in Bezug auf die Primär-Kontokennung und die mindestens eine Kollaborations-Kontokennung an einem Ort zusammenführt.

7. Verfahren zur Berechnung von Ressourcen, das über ein Rechner-Optimierungssystem (120) implementiert wird, umfassend:
Empfangen (404) einer Primär-Kontokennung und einer Zielort-Kennung an dem Optimierungssystem;
Erzeugen (408) von dem Optimierungssystem einer Kollaborator-Abfrage auf mindestens einer Kollaborationsplattform nach Kollaborations-Kontokennungen, die mit der Primär-Kontokennung zusammenpassen;
Empfangen (412) mindestens einer Kollaborations-Kontokennung von der mindestens einen Kollaborationsplattform an dem Optimierungssystem, wobei diese Kollaborations-Kontokennung eine Kollaborations-Ortkennung aufweist, die mit der Zielort-Kennung zusammenpasst;
Erzeugen (416) einer Reise-Abfrage von dem Optimierungssystem bei mindestens einem Online-Buchungssystem für mindestens einen Reiseplan-Datensatz, der eine Ausgangsort-Kennung entweder der Primär-Kontokennung oder der Kollaborations-Kontokennung mit der Zielort-Kennung verbindet;
**gekennzeichnet durch**
Ermitteln (420) einer Übereinstimmungsbewertung für die mindestens eine Kollaborations-Kontokennung an dem Optimierungssystem basierend auf dem mindestens einen Reiseplan-Datensatzes, wobei die Übereinstimmungsbewertung auf einer Übereinstimmung von Zeitbereichen und aktuellen Ort zwischen der Primär-Kontokennung und der mindestens einen Kollaborations-Kontokennung basiert; und
Steuern (424) eines Ausgabegeräts von dem Optimierungssystem basierend auf der Übereinstimmungsbewertung, um den Reiseplan-Datensatz mit der entsprechenden Buchungsmaschine zu erstellen oder anzupassen.

8. Verfahren nach Anspruch 7, wobei die Zielort-Kennung Ziel-Zeitbereiche umfasst.

9. Verfahren nach einem der Ansprüche 7 bis 8, wobei die Zielort-Kennung der Primär-Kontokennung zugeordnet ist.

10. Verfahren nach einem der Ansprüche 7 bis 9, wobei die mindestens eine Kollaborationsplattform mindestens eines umfasst: a) eine oder mehrere Social-Media-Plattformen; b) eine oder mehrere Kontaktverwaltungsdatenbanken; c) eine oder mehrere Personalplattformen.

11. Verfahren nach Anspruch 10, wobei die Übereinstimmungsbewertung ferner auf einer quantitativen Opportunitätsmetrik basiert, die einen Wert für das Zusammenführen von Personen an einem Ort in Bezug auf die Primär-Kontokennung und die mindestens eine Kollaborations-Kontokennung darstellt.

12. Verfahren nach einem der Ansprüche 7 bis 11, wobei die Steuerung (424) der Ausgabegeräte das Erzeugen eines Zeitplans von Ereignissen zu unterschiedlichen Zeitpunkten umfasst, welches Personen in Bezug auf die Primär-Kontokennung und die mindestens eine Kollaborations-Kontokennung an einem Ort zusammenführt.

13. Ein Rechnerprogramm, das das Verfahren nach einem der Ansprüche 7 bis 12 implementiert, wenn es von einem Rechner ausgeführt wird.

## Revendications

1. Moteur d'optimisation (120) de ressources informatiques comprenant un processeur et une mémoire pour stocker des instructions exécutables sur le processeur ; le processeur étant configuré pour exécuter des instructions stockées dans la mémoire ; les instructions comprenant :
la réception (404) d'un identifiant de compte primaire et d'un identifiant de localisation cible ;
la génération (408) d'une requête de collaborateur sur au moins une plateforme de collaboration pour des identifiants de compte de collaborateur correspondant à l'identifiant de compte primaire ;
la réception (412) d'au moins un identifiant de compte de collaborateur en provenance de l'au moins une plateforme de collaboration ayant un identifiant de localisation de collaborateur correspondant à l'identifiant de localisation cible ;
la génération (416) d'une requête de déplacement sur au moins un moteur de réservation en ligne pour au moins un enregistrement d'itinéraire de déplacement qui relie un identifiant de localisation d'origine de soit l'identifiant de compte primaire soit l'identifiant de compte de collaborateur à l'identifiant de localisation cible ;
**caractérisé par**
la détermination (420) d'un score d'intersection pour l'au moins un identifiant de compte de collaborateur sur la base de l'au moins un enregistrement d'itinéraire, dans lequel le score d'intersection est basé sur une intersection de plages de temps et de la localisation actuelle entre l'identifiant de compte primaire et l'au moins un identifiant de compte de collaborateur ; et,
la commande (424) d'un dispositif de sortie sur la base du score d'intersection, de manière à créer ou ajuster l'enregistrement d'itinéraire de déplacement avec le moteur de réservation pertinent.

2. Moteur d'optimisation (120) selon la revendication 1, dans lequel l'identifiant de localisation cible inclut des plages de temps cibles.

3. Moteur d'optimisation (120) selon l'une quelconque des revendications 1 et 2, dans lequel l'identifiant de localisation cible est associé à l'identifiant de compte primaire.

4. Moteur d'optimisation (120) selon l'une quelconque des revendications 1 à 3, dans lequel l'au moins une plateforme de collaboration inclut au moins l'une parmi : a) une ou plusieurs plateformes de réseaux sociaux ; b) une ou plusieurs bases de données de gestion de contacts ; c) une ou plusieurs plateformes de ressources humaines.

5. Moteur d'optimisation (120) selon l'une quelconque des revendications 1 à 4, dans lequel le score d'intersection est en outre basé sur une métrique d'opportunité quantitative représentant une valeur de co-localisation d'individus respectivement à l'identifiant de compte primaire et à l'au moins un identifiant de compte de collaborateur.

6. Moteur d'optimisation (120) selon l'une quelconque des revendications 1 à 5, dans lequel la commande (424) des dispositifs de sortie inclut la génération d'un calendrier d'événements à différents moments qui co-localisent des individus respectivement à l'identifiant de compte primaire et à l'au moins un identifiant de compte de collaborateur.

7. Méthode pour ressources informatiques mise en œuvre via un moteur d'optimisation d'ordinateur (120) comprenant :
la réception (404), au niveau du moteur d'optimisation, d'un identifiant de compte primaire et d'un identifiant de localisation cible ;
la génération (408), à partir du moteur d'optimisation, d'une requête de collaborateur sur au moins une plateforme de collaboration pour des identifiants de compte de collaborateur correspondant à l'identifiant de compte primaire ;
la réception (412), au niveau du moteur d'optimisation, d'au moins un identifiant de compte de collaborateur en provenance de l'au moins une plateforme de collaboration ayant un identifiant de localisation de collaborateur correspondant à l'identifiant de localisation cible ;
la génération (416), à partir du moteur d'optimisation, d'une requête de déplacement sur au moins un moteur de réservation en ligne pour au moins un enregistrement d'itinéraire de déplacement qui relie un identifiant de localisation d'origine de soit l'identifiant de compte primaire soit l'identifiant de compte de collaborateur à l'identifiant de localisation cible ;
**caractérisé par**
la détermination (420), au niveau du moteur d'optimisation, d'un score d'intersection pour l'au moins un identifiant de compte de collaborateur sur la base de l'au moins un enregistrement d'itinéraire, dans lequel le score d'intersection est basé sur une intersection de plages de temps et de localisation actuelle entre l'identifiant de compte primaire et l'au moins un identifiant de compte de collaborateur ; et,
la commande (424), à partir du moteur d'optimisation, d'un dispositif de sortie sur la base du score d'intersection, de manière à créer ou ajuster l'enregistrement d'itinéraire de déplacement avec le moteur de réservation pertinent.

8. Méthode selon la revendication 7, dans laquelle l'identifiant de localisation cible inclut des plages de temps cibles.

9. Méthode selon l'une quelconque des revendications 7 et 8, dans laquelle l'identifiant de localisation cible est associé à l'identifiant de compte primaire.

10. Méthode selon l'une quelconque des revendications 7 à 9, dans laquelle l'au moins une plateforme de collaboration inclut au moins l'une parmi : a) une ou plusieurs plateformes de réseaux sociaux ; b) une ou plusieurs bases de données de gestion de contacts ; c) une ou plusieurs plateformes de ressources humaines.

11. Méthode selon la revendication 10, dans laquelle le score d'intersection est en outre basé sur une métrique d'opportunité quantitative représentant une valeur de co-localisation d'individus respectivement à l'identifiant de compte primaire et à l'au moins un identifiant de compte de collaborateur.

12. Méthode selon l'une quelconque des revendications 7 à 11, dans laquelle la commande (424) des dispositifs de sortie inclut la génération d'un calendrier d'événements à différents moments qui co-localisent des individus respectivement à l'identifiant de compte primaire et à l'au moins un identifiant de compte de collaborateur.

13. Programme d'ordinateur mettant en œuvre le procédé selon l'une quelconque des revendications 7 à 12 lorsqu'il est exécuté par un ordinateur.
